# EUROPEAN PATENT APPLICATION

(11) **EP 1 081 923 A1**
(43) Date of publication of application: **07.03.2001**
(21) Application number: 99117521.7
(22) Date of filing: 04.09.1999
(51) Int. Cl.: H04M 1/247

(54) **Mobile handset having a grey-scale display**

(71) Applicant: SIEMENS AKTIENGESELLSCHAFT, 80333 München (DE)
(72) Inventor: Ornbo, Lars, Dipl.-Ing., DK-9000 Aalborg (DK)

(57) **Abstract**

A mobile handset for a mobile communications network, the mobile handset including a grey-scale display for distinguishing recently-received information from already-displayed information by displaying the recently-received information, at least temporarily, in a different grey-scale tone than the grey-scale tone of the already-displayed information.

## Description

### Related Technology

The present invention relates generally to a handset for a mobile communication systems in general, and, more specifically, to a mobile handset having a grey-scale display.

A mobile handset typically includes a visual display, often a liquid crystal-type display, for presenting information to the mobile subscriber, or user. Information to be displayed may include continuously-displayed, permanent, quasi-permanent or slowly-changing information, such as network name, battery charge information, and received signal strength. The information to be displayed may also include newly-received information and/or information of a more transient nature, i.e., information that is valid only for a limited time, such as a cell broadcast message or an indication of a new event, such as the reception of a message or an incoming call.

Newly received and/or transient-type information has typically simply been added to the continuously-displayed information on the display, resulting often in crowded displays in which it is difficult for the user to easily recognize what is new and/or transient--and therefore of special interest--from what is old and/or already present on the display. This problem is especially acute when the mobile handset is in an idle, "stand-by" state in which much information is typically displayed.

### Advantages of the Invention

The present invention provides a mobile handset for a mobile communications network, characterized in that the mobile handset includes a grey-scale display for distinguishing recently-received information from already-displayed information by displaying the recently-received information in a different grey-scale tone than the grey-scale tone of the already-displayed information.

The present invention also provides an article comprising a storage medium, the storage medium having a set of instructions, the set of instructions being capable of being executed by at least one processor to implement a method for distinguishing recently-received information from already-displayed information on a mobile handset in a mobile communications network, characterized in that a grey-scale display is used in the mobile handset for displaying the recently-received information in a different grey-scale tone than the grey-scale tone of the already-displayed information.

The present invention also provides a method for distinguishing recently-received information from information already displayed on a mobile handset in a mobile communications network, characterized in that a grey-scale display is used in the mobile handset for displaying the recently-received information in a different grey-scale tone than the grey-scale tone of the already-displayed information .

The present invention shows transient and/or newly-received information so that the user is able to easily identify which information is new and/or transient and therefore of special interest. The present invention also helps the user to focus on this information of interest.

### Drawings

Further advantages of the present invention will become apparent from the claims and the description below, based on the drawings, in which:
Fig. 1 is a schematic diagram showing a mobile handset;
Fig. 2A is a schematic diagram showing a mobile handset display in an idle state;
Fig. 2B is a schematic diagram showing the mobile handset display of Fig. 2A in an idle state with new information highlighted relative to older information;
Fig. 2C is a schematic diagram showing the mobile handset display of Fig. 2B in an idle state with the old information changed to a grey-scale tone similar to the grey-scale tone of new information; and
Fig. 2D is a schematic diagram showing the mobile handset display of Fig. 2C in an idle state with the new information changed to a grey-scale tone lighter than the grey-scale tone of the new information.

### Description

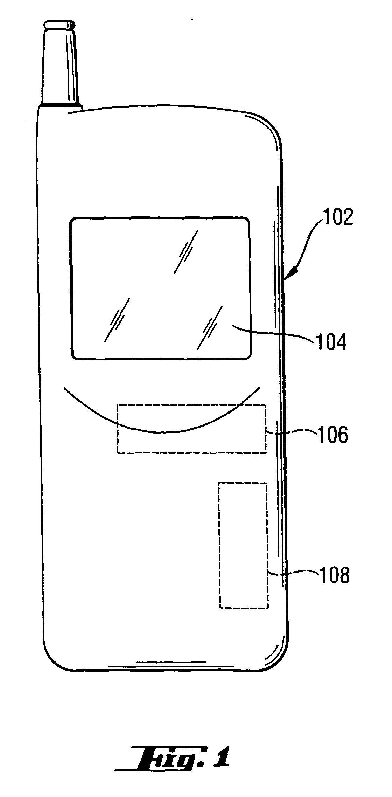

Referring to Fig. 1, a mobile handset [102] includes display [104], display driver [106] and processor [108]. Mobile handset [102] may be any of a variety of mobile terminals capable of operating in any of a variety of systems, such as, for example, in a Global System for Mobile Telecommunications (GSM) system. Display [104] may be a liquid crystal display or any other type of display suitable for use in a mobile handset, such as a flat panel-type display etc. As embodied herein, display [104] is a grey-scale display, i.e., it is any of a variety of known display-types capable of presenting information in a plurality of grey-scale tones ranging from light to dark tones. Display driver [106] is any of various known drivers for driving display [104]. Processor [108] is any of various known processors for controlling display driver [106]. In some embodiments of the present invention, processor [108] may be integrated into display driver [106].

Figs. 2A-D show an exemplary display [104] of mobile handset [102] in an idle state. In Fig. 2A, the display [104] shows continuously-displayed, or existing, information [201] including network name [202], network signal strength [204], battery power [206], date/time [208] and menu or softkey functions [210A-C]. Continuously-displayed information [201] may include quasi-permanent and slowly-changing information. Though continuously-displayed information [201] is depicted dark against a light background, in other embodiments of the present invention the information could be displayed light against a dark background, for example. In Fig. 2B, cell broadcast message [212] has been received by the mobile handset. As embodied herein, upon receipt of cell broadcast message [212], the grey-scale tone of continuously-displayed information [201] is changed so that it is "faded," i.e., a lighter grey-scale tone, relative to the cell broadcast message. The cell broadcast message is presented in a grey-scale tone similar to the original grey-scale tone of continuously-displayed information [201] shown in Fig. 2A, or in some embodiments in an even darker, or more prominent grey-scale tone. Cell broadcast message [212] thereby stands out, or is highlighted, relative to continuously-displayed information [201]. In embodiments of the present invention, continuously-displayed information [201] is presented as light grey-scale tone figures on a dark background. Upon receipt of cell broadcast message [212], the cell broadcast message is presented in a relatively light grey-scale tone, while continuously-displayed information is "faded" to a darker tone so that the cell broadcast message is highlighted, or stands out.

Because the new information is highlighted relative to the existing, continuously-displayed information, the user is able to immediately identify what is new and is assisted in focusing on the new information.

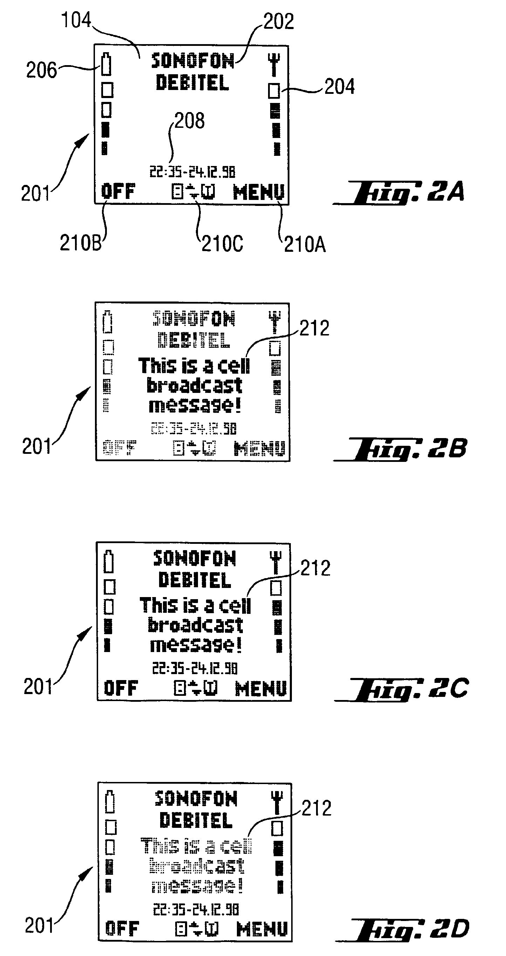

If cell broadcast message [212] is to become a part of continuously displayed information [201] after a predetermined or user-definable time-delay, or upon a user command, all the display information, including the cell broadcast message, may be set to the same grey-scale tone, as shown in Fig. 2C. Alternatively, the continuously-displayed information may be changed to a darker grey-scale tone, while the cell broadcast information is faded to a lighter grey-scale tone, as shown in Fig. 2D. If the cell broadcast information is to be deleted, it may be removed from the display after a predetermined or user-definable time-delay or upon a user command. The continuously displayed information may then be returned to its original darker grey-scale tone.

Preferably, control software for display driver [106] is programmed to perform the grey-scale changes according to the present invention. Such programming modifications are preferably executed by processor [108] for executing display driver functions, or by another appropriate processor. See Fig. 1. As such programming modifications would be well-understood by a person of skill in the art, they are not further described herein. It should be noted that embodiments are also possible in which hardware changes replace the software changes. In some embodiments of the present invention, processor [108] may be integrated into display driver [106].

Various embodiments within the scope of the present invention are possible. For example, the present invention may be applied to various types of displays. Additionally, various types of highlighting schemes may be used to enhance the visibility of new or transient information. The transient or new information may include short messages or other types of information, and may be manipulated in a variety of ways, such as fading or deleting, after it has been highlighted. These and other variations are intended to be part of the present invention, the scope of which is intended to be limited only by the claims appended hereto.

## Claims

1. A mobile handset for a mobile communications network, characterized in that the mobile handset includes a grey-scale display for distinguishing recently-received information from already-displayed information by displaying the recently-received information in a different grey-scale tone than the grey-scale tone of the already-displayed information.

2. The mobile handset according to claim 1, characterized in that the recently-received information is presented highlighted relative to the already-displayed information.

3. The mobile handset according to claim 1, characterized in that the recently-received information is presented in a darker or a lighter grey-scale tone relative to the grey-scale tone of the already-displayed information.

4. The mobile handset according to one of claims 1 and 2, characterized in that the already-displayed information is changed, upon receiving the recently-received information, to a grey-scale tone less prominent than the grey-scale tone of the already-displayed information before the receiving of the recently-received information.

5. The mobile handset according to claim 4, characterized in that the already-displayed information is changed to a grey-scale tone similar to the grey-scale tone of the recently-received information after the already-displayed information is changed to a less prominent grey-scale tone.

6. The mobile handset according to claim 2, characterized in that the recently-received information is changed to less prominent grey-scale tone relative to the already-displayed information after the recently-received information is presented highlighted relative to the already-displayed information.

7. The mobile handset according to claim 2, characterized in that the recently received information is erased after the recently-received information is presented highlighted relative to the information already displayed.

8. The mobile handset according one of claims 6 and 7, characterized in that the changing or erasing is automatic.

9. The mobile handset according one of claims 6 and 7, characterized in that the changing or erasing is manually-initiated.

10. The mobile handset according to claim 1, characterized in that the recently-received information is transient information such as a cell broadcast message of the mobile communications network or a subscriber-specific message.

11. The mobile handset according to claim 1, characterized in that the already-displayed information includes continuously-displayed, permanent, quasi-permanent, or slowly-changing information.

12. The mobile handset according to claim 1, characterized in that the already-displayed information includes network name, battery capacity information and/or received signal strength.

13. The mobile handset according to claim 1, characterized in that the grey-scale display distinguishes recently-received information from already-displayed information when the mobile handset is in an idle state.

14. The mobile handset according to claim 1, characterized in that the mobile handset includes a display driver for controlling the display.

15. An article comprising a storage medium, the storage medium having a set of instructions, the set of instructions being capable of being executed by at least one processor to implement a method for distinguishing recently-received information from already-displayed information on a mobile handset in a mobile communications network, characterized in that a grey-scale display is used in the mobile handset for displaying the recently-received information in a different grey-scale tone than the grey-scale tone of the already-displayed information.

16. The article according to claim 15, characterized in that the recently-received information is presented highlighted relative to the already-displayed information.

17. The article according to claim 15, characterized in that the mobile handset includes a processor for executing the set of instructions.

18. A method for distinguishing recently-received information from information already displayed on a mobile handset in a mobile communications network, characterized in that a grey-scale display is used in the mobile handset for displaying the recently-received information in a different grey-scale tone than the grey-scale tone of the already-displayed information .

19. The method according to claim 18, characterized in that the recently-received information is presented highlighted relative to the information already displayed.

20. The method according to claim 18, characterized in that the recently-received information is presented in a darker or lighter grey-scale tone relative to the already-displayed information.
